# EUROPEAN PATENT SPECIFICATION

(11) **EP 3 995 957 B1**
(45) Date of publication and mention of the grant of the patent: **11.12.2024**
(21) Application number: 21199234.2
(22) Date of filing: 21.09.2015
(51) Int. Cl.: G06F 9/50, G06F 9/445, G06F 16/16, G06F 16/182

(54) **COMPUTING ENVIRONMENT SELECTION TECHNIQUES**
VERFAHREN ZUR AUSWAHL VON RECHNERUMGEBUNGEN
TECHNIQUES DE SÉLECTION D'ENVIRONNEMENT INFORMATIQUE

(30) Priority: 22.09.2014 US 201414492648
(43) Date of publication of application: 11.05.2022
(62) Divisional of application: 15781182.9
(73) Proprietor: Amazon Technologies Inc., Seattle, WA 98108-1226 (US)
(72) Inventor: VERMA, Varun, Seattle, 98109-5210 (US)
(74) Representative: D Young & Co LLP

(56) References cited:
- EP-A2- 2 081 113
- EP-A2- 2 434 400
- US-B1- 8 387 047
- US-B2- 8 756 293

## Description

### CROSS REFERENCE TO RELATED APPLICATION

This application claims priority from co-pending U.S. Patent Application No. 14/492,648, filed September 22, 2014, entitled "COMPUTING ENVIRONMENT SELECTION TECHNIQUES".

### BACKGROUND

Access to productivity and other applications is often provided using virtual computing environments. A user may, for example, establish a connection with a server to access applications that are executed on the server. Various techniques may be used to provide the usability as if the applications were executing locally. A display of a user device, for example, may provide a graphical user interface in accordance with a desktop metaphor, thereby enabling the user to open and interact with remotely executed applications. In some examples, such functionality is provided using an organization's own hardware, such as servers hosted in the organization's data center. In other examples, a computing resource service provider utilizes its hardware to host virtual computing environments on behalf of customers. Such systems are sometimes referred to generally as "virtual desktop infrastructure" (VDI).

Client computing devices and their corresponding virtual computing system environments may each have various installed applications, which may be used to access one or more data files stored within either the client computing device or the virtual computing system environment. Conventional configurations for providing virtual computing system environments are often inflexible, often making it difficult to switch between one environment and the other. Further, in some circumstances, allowing local execution of an application can increase security risks, such as then the client computing device is a portable computer (e.g., notebook or tablet computer) and the application accesses sensitive data. In other circumstances, a file of a particular file type may be available in one environment, but without the proper application operable to open and process the file.

US 8 756 293 B2 relates to a method of virtualizing file extensions in a computer system by determining an association between applications in a virtual environment and a file extension.

### BRIEF DESCRIPTION OF THE DRAWINGS

Various embodiments in accordance with the present disclosure will be described with reference to the drawings, in which:
FIG. 1 shows an illustrative example of an environment in which various embodiments can be implemented;
FIG. 2 shows an illustrative example of an environment in which one or more components of a virtual computing environment service are configured to enable a user to access a virtual computing environment in accordance with at least one embodiment;
FIG. 3 shows an illustrative example of an environment in which one or more components of a user's computing device are configured to enable communication and access with a virtual computing environment service in accordance with at least one embodiment;
FIG. 4 shows an illustrative example of a user's computing device environment wherein a user can select one or more data files stored within the computing device in accordance with at least one embodiment;
FIG. 5 shows an illustrative example of a user's computing device environment wherein the selected data file is utilized within a virtual computing environment through an interface in response to a policy implementation in accordance with at least one embodiment;
FIG. 6 shows an illustrative example of a user's computing device environment wherein the selected data file is utilized by executing an application within the computing device environment in accordance with at least one embodiment;
FIG. 7 shows an illustrative example of a process for determining the computing environment in which a selected data file may be utilized using an application in accordance with at least one embodiment;
FIG. 8 shows an illustrative example of a process for utilizing one or more policies to determine a computing environment wherein a selected data file may be utilized in accordance with at least one embodiment;
FIG. 9 shows an illustrative example of a process for transferring a data file to a different computing environment in response to determining that an application is unavailable for using the data file in accordance with at least one embodiment; and
FIG. 10 illustrates an environment in which various embodiments can be implemented.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Techniques described and suggested herein relate to the selection of a computing environment in which to access an application for utilizing one or more data files located in either a local computing environment or in a virtual computing system environment. In an embodiment, an entity uses a computing device (e.g., laptop computer, desktop computer, mobile device, etc.) to utilize a data file stored on the computing device. The data file may be associated with a variety of applications installed on the computing device. For instance, when the entity selects the data file, the computing device may launch an associated application installed on the computing device to enable the user to utilize the data file for his/her purposes. In some examples, the entity is an employee of an organization and is issued a computing device to support the organization's business needs. However, the techniques described herein are applicable to other contexts where virtual computing system environments are used.

In an embodiment, the organization can install, on the computing device, a location determination application, which may be configured to serve as a default application for various data file types. For instance, when the entity select a particular data file, rather than executing an application that may be utilized to access the data file, the computing device may execute this location determination application. The location determination application may be configured to evaluate a policy provided by the organization and encoded in a registry or other mechanism of the computing device to determine whether the policy specifies that the data file is to be utilized within the local computing device environment or if the data file is to be utilized within a virtual computing system environment. For instance, if the policy specifies that the data file may be utilized within the local computing device environment, the location determination application may cause the computing device to execute an application installed on the device that may be usable by the entity to utilize the selected data file.

If the location determination application determines, based on the policy encoded in the registry files of the computing device, that the data file is to be utilized within a virtual computing system environment, the location determination application may cause the computing device to initiate a communications session with a virtual computing environment service to launch a virtual computing environment interface. This interface may be a graphical user interface (GUI), which may enable the entity to interact with a virtual machine instance comprising a variety of applications that may be associated with various data file types. In an embodiment, the location determination application causes the computing device to transmit the selected data file to a physical host (i.e., physical computer system) provided by the virtual computing environment service to store the data file within a data storage repository within the physical host. This may enable use of this data file within the virtual computing environment.

Once the data file has been transmitted to a physical host within the virtual computing environment service, the location determination application may transmit one or more executable instructions to an application within the virtual computing environment to cause the application to be launched within the environment and the application to access the data file. This may enable the entity to utilize the interface to interact with this application and the data file accessed within the virtual computing environment. When the entity has finished utilizing the data file in this environment, the application may store the data file in a location different from the user's computing device. Further, the virtual computing environment service may transmit the updated data file to the entity's computing device, where it may be synchronized and stored.

In an alternative embodiment, the entity selects a data file within the virtual computing environment through the interface accessible through his/her computing device. If the application required to access the selected data file is not available within the virtual computing environment, a virtual computing environment service may access an entity profile or the entity's computing device to determine whether information in the profile indicates that a suitable application is installed on the entity's computing device. If the suitable application is installed on the entity's computing device, the virtual computing environment service may transmit the selected data file to the entity's computing device and cause the application to be launched within the computing device, enabling the entity to utilize the data file within the local (e.g., from the perspective of the entity) computing environment.

In this manner, a data file selected by an entity may be accessed and utilized in an optimal computing environment based on application availability and policy definition. In addition, the techniques described and suggested herein facilitate additional technical advantages. For example, because, in some embodiments, the virtual computing environment service may transmit the data file to an environment wherein an application may be available to the entity to access this data file, the entity may be able to access the data file from any suitable environment without need to manually transfer the data file to another location or environment in order to access the data file or to install an application within his/her computing device or virtual computing environment to be able to utilize the data file.

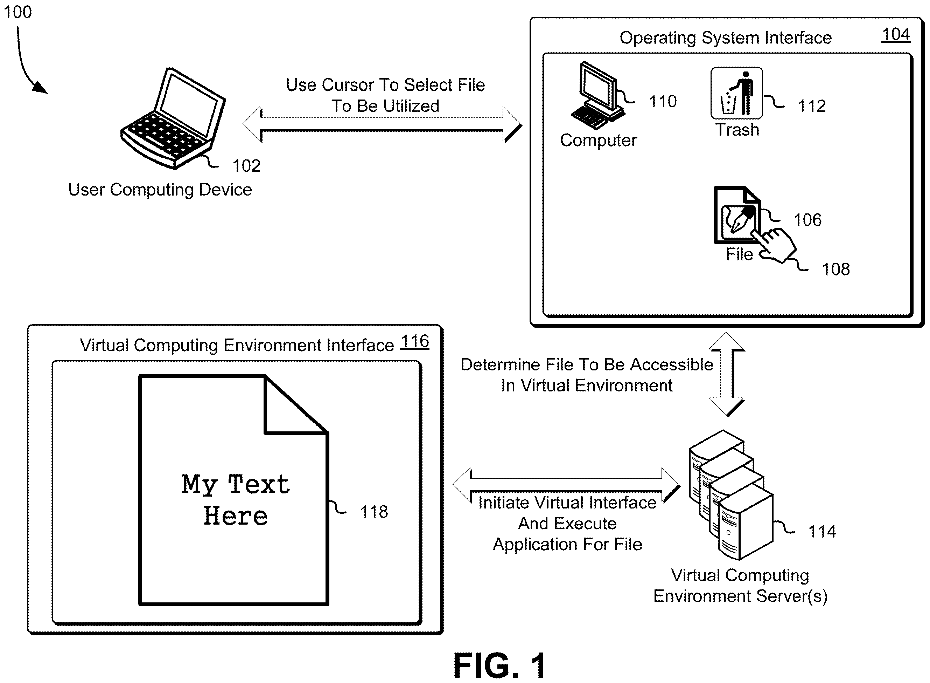

FIG. 1 shows an illustrative example of an environment 100 in which various embodiments can be implemented. In the environment 100, a user, through a computing device 102 (e.g., laptop computer, desktop computer, mobile device, etc.) may interact with an operating system interface 104 to access one or more data files 106 stored within the computing device 102. The operating system interface 104 may be a graphical user interface, which a user, through one or more user input devices installed on the computing device 102, may utilize to interact with one or more iconic graphical representations of applications, file structures, and data files stored within the computing device 102. For instance, as illustrated in FIG. 1, the user may utilize his/her computing device 102 to interact with a cursor 108 within the operating system interface 104 to select a computer icon 110, a trash icon 112 and one or more data file icons 106. These icons 106, 110, 112 may be utilized to access various functions of the operating system, applications, file structures and the data files themselves through the interface 104.

When a user utilizes the cursor 108 to select a data file icon 106 in order to utilize an associated data file, the operating system installed on the computing device 102 may determine whether the selected data file is associated with one or more applications installed on the computing device 102. For instance, the operating system, in response to a user utilizing the cursor 108 to select a data file icon 106, may access a registry file to determine whether the particular data file type is associated with one or more applications installed on the computing device 102. If the particular data file type is associated with a particular application, the operating system may execute the application and enable use of the data file through this application. For example, if the particular data file is a word processing document, the document may be opened using any suitable word processing application. In another example, if the particular data file is a spreadsheet document, the document may be opened using any suitable spreadsheet application. While registry files are used throughout the present disclosure for the purpose of illustration, the one or more policies may be encoded in other mechanisms that may be used to determine whether the particular data file type is associated with one or more applications installed on the computing device 102. For instance, some operating systems may be configured to utilize settings other than registry files to encode these one or more policies stored within the user's computing device 102.

In an embodiment, the selected data file, instead of being associated with an application installed and accessible to the user through the computing device 102, may be associated with a location determination application installed on the computing device 102 by an administrator of the user's computing device 102 or some other supervisory entity. The location determination application may be configured to access one or more registry files installed on the computing device 102 to identify one or more policies that may be associated with the selected data file type. These policies may specify whether data files of the particular type is to be utilized through an application installed on the computing device 102 or through an application available in a separate computing environment. If the one or more policies specify that the data files of the particular type may be accessed using an application installed on the computing device 102, the location determination application may cause the operating system to execute the appropriate application and enable the user, through the computing device 102 and operating system interface 104, to utilize the application to interact with the selected data file.

If, however, the one or more policies specify that the selected data file is not be used utilizing any of the applications installed on the computing device 102, the location determination application may cause the operating system to initiate a communications session with one or more virtual computing environment servers 114 to access a virtual computing environment wherein the selected data file may be utilized. The virtual computing environment servers 114 may comprise one or more physical hosts, which may be used to instantiate one or more virtual machine images. Further, the virtual computing environment may be a single-tenant (e.g., usable by only a single user at a time) desktop or other single-tenant virtual computing environment which may not employ a desktop metaphor. These one or more virtual machine images may include an operating system and one or more applications that, when instantiated, may be installed on one or more physical hosts within these virtual computing environment servers 114. As with the computing device 102, the virtual computing environment servers 114 may provide users with a virtual computing environment interface 116, which may be used to interact with one or more applications available within the virtual computing environment.

The location determination application may cause the operating system installed on the computing device 102 to initiate a user client, which may be used to access this virtual computing environment interface 116. Additionally, the location determination application may transmit the selected data file to these virtual computing environment servers 114, where the data file may be stored within a location different from the user's computing device 102 where the virtual machine image for the particular user has been instantiated. In an embodiment, the location determination application transmits, to the virtual computing environment servers 114, one or more sets of credentials to enable authentication of the user. If the virtual computing environment servers 114 are unable to authenticate the user, the servers 114 may deny the location determination application request to access the virtual computing environment interface 116 through the user's computing device 102.

If the one or more virtual computing environment servers 114 are able to authenticate the user, the location determination application may transmit one or more executable instructions to the operating system of the virtual computing environment to cause an application 118 to be executed within the virtual computing environment to enable use of the selected data file. The user, through the user client usable through the operating system interface 104, may be able to utilize the virtual computing environment interface 116 to interact with the application 118 and the selected data file. When the user finishes utilizing the data file within the virtual computing environment, the one or more virtual computing environment servers 114 may store the updated data file within the physical host where the virtual machine image may be instantiated. Additionally, the virtual computing environment servers 114 may transmit the updated data file to the user computing device 102, which may synchronize this updated data file with the data file stored therein.

In an alternative environment, a user, through the virtual computing environment interface 118, selects a data file for use within the virtual computing environment. When the user selects the data file, the one or more virtual computing environment servers 114 may determine whether the particular virtual machine image includes the appropriate application to enable use of the data file. If the virtual computing environment servers 114 determine that no appropriate application is available within the virtual computing environment, the virtual computing environment servers 114 may communicate with the user's computing device 102, such as through one or more application programming interface (API) calls to the device 102, to determine if an application capable of being utilized to enable use of the data file is available within the operating system environment of the computing device 102. If an application is identified, the virtual computing environment servers 114 may access the user's account information within a user account information data store to determine whether the selected data file type may be accessed using the user's computing device 102.

If the data file may be accessed using an application installed on the user's computing device 102, the virtual computing environment servers 114 may transmit the selected data file from the physical host wherein the virtual machine image is instantiated to the user's computing device 102. Further, the virtual computing environment servers 114 may transmit executable instructions to the operating system installed on the user's computing device 102 to execute the particular application and enable use of the data file through the application. Thus, a user may be able to utilize this application, through the operating system interface 104, to use the selected data file. Once the user has finished using the data file, the user's computing device 102 may transmit the updated data file to the virtual computing environment servers 114, which may synchronize the updated data file with the existing data file stored within a location different from the user's computing device 102.

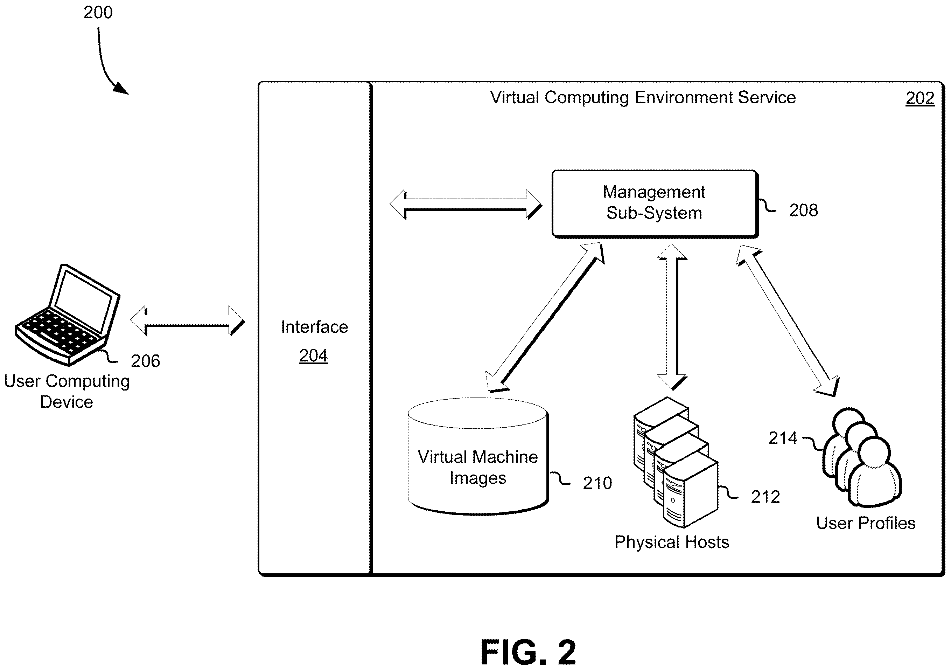

As noted above, if a location determination application determines, based at least in part on one or more policies encoded in registry files stored within the user's computing device, that a selected data file is to be utilized within a virtual computing environment, the location determination application may cause the user's computing device to initiate a communications session with a virtual computing environment service to access this environment. Further, the location determination application may transmit one or more executable instructions to the virtual computing environment service that may cause the particular application to be launched within this environment, enabling use of the selected data file within the virtual computing environment. Accordingly, FIG. 2 shows an illustrative example of an environment 200 in which one or more components of a virtual computing environment service 202 are configured to enable a user to access a virtual computing environment in accordance with at least one embodiment.

In the environment 200, the virtual computing environment service 202 may provide users with an interface 204 that may enable a user, through his/her computing device 206, to access the virtual computing environment service 202. A user may utilize the interface 204 through one or more communications networks, such as the Internet. The interface 204 may contain certain security safeguards to ensure that the user has authorization to access the virtual computing environment service 202. For instance, in order to access the virtual computing environment service 202, a user may need to provide a username and a corresponding password or encryption key when using the interface 204. Additionally, requests (e.g., API calls) submitted to the interface 204 may require an electronic signature generated using a cryptographic key such that the electronic signature is verifiable by the virtual computing environment service 202, such as by an authorization system (not shown).

Once the user, through his/her computing device 206 has gained access to the virtual computing environment service 202 through the interface 204, the virtual computing environment service 202 may allow the user to interact, through the interface 204, with a management sub-system 208. For instance, the management sub-system 206 may enable the user to remotely manage and maintain one or more virtual machine images. These virtual machine images may be maintained in data storage within a virtual machine image data store 210. When a user submits a request for provisioning a virtual machine instance, the virtual computing environment service 202 may identify the machine image the user has requested and allocate the resources necessary (e.g., the processors and random-access memory (RAM) required to operate the components of the machine image) to process the machine image. The machine image may be instantiated on one or more physical storage devices (e.g., one or more servers or hard drives) that may act as a physical host 212 for the instance.

The virtual computing environment service 202 may also maintain, for each user of the service 202, a user account which may be recorded within a user profile data store 214. Each user profile may include one or more policies, which may specify whether an application, usable to enable a user to utilize particular data file types, may be launched within the user's virtual computing environment, within the user's computing device 206, or in any other environment. For instance, an administrator of the user's computing device 206 may generate a policy, which may be applied to the user's account, which specifies that certain data files may only be opened within the user's virtual computing environment. This policy may also be encoded in one or more registry files on the user's computing device 206.

When a user, using his/her computing device 206, attempts to open a particular data file stored on the device 206, the operating system installed on the device 206 may determine which application, installed on the device 206, is associated with the selected data file. For instance, in an embodiment, the operating system determines, based at least in part on one or more registry files stored within the computing device 206, that the selected data file is associated with a location determination application. This application may not be accessible by the user and may be installed on the computing device 206 by the aforementioned administrator of the device 206. The location determination application may be configured to access, upon selection of the data file by the user, one or more registry files to identify any policies pertaining to the particular data file type. For instance, the policies may specify that data files of a particular type are not to be opened using an application installed on the user's computing device 206. Further, these policies may specify that the data files of the particular type are to be opened within a particular virtual computing environment. The policies may further specify an ordering of one or more virtual computing environments wherein the data files may be opened. The ordering may be created based at least in part on one or more security aspects of these virtual computing environments. For instance, a virtual computing environment that has significant security safeguards (e.g., data encryption, firewall implementation, virus scanning, etc.) may be specified in a higher position within the ordering of these one or more virtual computing environments.

If the location determination application determines, based at least in part on these one or more policies, that the selected data file is not be opened within the local (e.g., relative to the user's computing device 206), the location determination application may cause the user's computing device 206 to initiate a communications session with the virtual computing environment service 202 to enable the user to access his/her virtual computing environment through the interface 204. In some embodiments, the location determination application may provide, to the virtual computing environment service 202, the user's credentials necessary to access the service 202. In response to the user's request, provided by the location determination application, to access his/her virtual computing environment, the management sub-system 208 may access the user's account within the user profile data store 214 to identify the particular physical host 212 that has instantiated the particular virtual machine image for the user's virtual computing environment. Once the management sub-system 208 has identified the physical host 212, the management sub-system 208 may enable the user to access his/her virtual computing environment through the interface 204. Additionally, the location determination application may transmit the selected data file to the virtual computing environment service 202, wherein the management sub-system 208 may store the data file within a different location other than the user's computing device 206.

Once the data file has been stored within the different location other than the user's computing device 206 and the user, through the interface 204, has gained access to his/her virtual computing environment, the location determination application may transmit one or more executable instructions to the management sub-system 208 to cause an application usable to enable use of the selected data file to be launched within the virtual computing environment. This may enable the user, through his user computing device 206, to use the data file within this virtual computing environment. When the user has finished using the selected data file within the virtual computing environment, the management sub-system 208 may transmit the updated data file to the user's computing device 206 in order to synchronize the data files within the user's computing device 206 and the virtual computing environment.

In an embodiment, the user, through the interface 204, selects one or more data files to be opened within the virtual computing environment. In response to this selection, the management sub-system 208 may determine whether the particular virtual machine instance utilized by the user includes the one or more applications necessary to open these data files. If the management sub-system 208 is unable to identify any applications capable of opening the selected data files, the management sub-system 208 may access the user profile data store 214 to identify any policies regarding these particular data files. For instance, as noted above, an administrator of the user's computing device 206 may specify, within a particular policy, that the user's computing device 206 has the one or more applications necessary to open the data file and that the user is authorized to use these applications locally (e.g., within the user's computing device 206 environment).

If the management sub-system 208 is unable to identify an application, whether provided through the virtual machine instance, other virtual machine instances available to the user, or installed on the user's computing device 206, that may be used to open the selected one or more data files, the management sub-system 208 may deny the user's request to open these data files. However, if the management sub-system 208 is able to identify an alternative environment wherein an application is available to open the selected data files, the management sub-system 208 may transmit the data files and executable instructions to the selected environment to cause the application to be launched and enable use of the data files within that environment. For instance, if the application necessary to open the selected data files can be found within the user's computing device 206, the management sub-system 208 may obtain the selected data files from the physical hose 212 and transmit these data files and executable instructions to the user's computing device 206 to cause the user's computing device 206 to launch the selected application and enable use of these data files. Once the user has finished utilizing the application and data files within the user's computing device 206, the user's computing device 206 may transmit the updated data files to the virtual computing environment service 202, which, through the management sub-system 208, may synchronize these obtained data files with the data files stored within the different location other than the user's computing device 206.

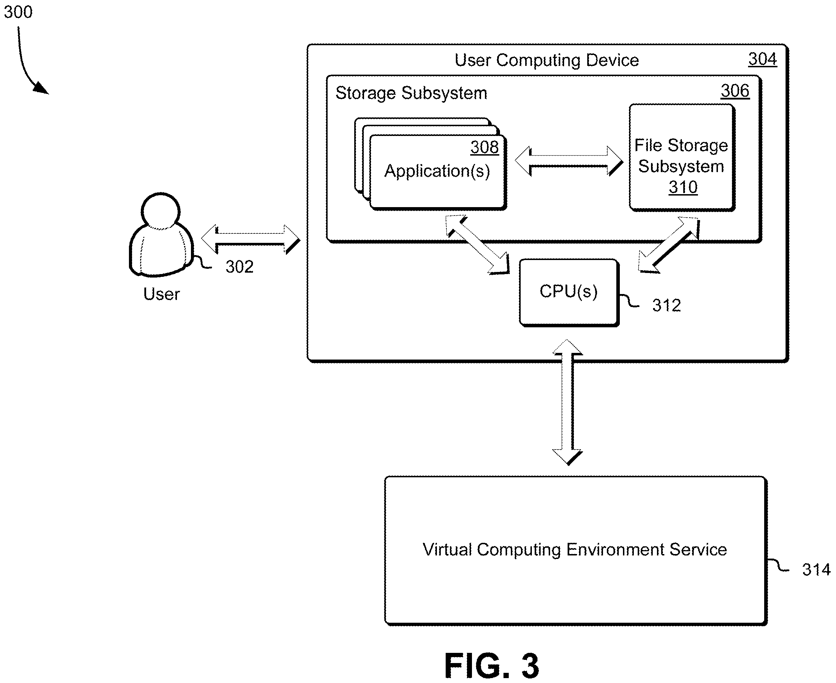

As noted above, a user may utilize a computing device to launch one or more applications to open one or more data files. In some embodiments, the selected data files may be associated with a location determination application, which may be used to determine whether the data files may be opened using an application installed on the computing device or if the data files may only be opened within a virtual computing environment. Accordingly, FIG. 3 shows an illustrative example of an environment 300 in which one or more components of a user's computing device 304 are configured to enable communication and access with a virtual computing environment service 314 in accordance with at least one embodiment. As shown in FIG. 3, the computing device 304 may include one or more processors 312 (e.g., central processing units (CPUs)) that may be configured to communicate with and are operatively coupled to a number of peripheral subsystems via a bus subsystem. These peripheral subsystems may include a storage subsystem 306, comprising a memory subsystem for utilization of one or more applications 308 and a file storage subsystem 310, one or more user interface input devices, one or more user interface output devices, a network interface subsystem, and the like. The peripheral subsystems may also include one or more sensors in addition to sensors of input devices. Such sensors may include, but are not limited to, global positioning system (GPS) sensors, accelerometers, temperature sensors and others.

The storage subsystem 306 may provide a computer-readable storage medium for storing the basic programming and data constructs that may provide the functionality of at least one embodiment of the present disclosure. The applications or components thereof (programs, code modules (i.e., programming modules), instructions) that, when executed by one or more processors, may provide the functionality of one or more embodiments of the present disclosure, may be stored in the storage subsystem 306. These application modules or instructions may be executed by the one or more processors 312. The storage subsystem 306 may additionally provide a repository for storing data used in accordance with the present disclosure. The storage subsystem 306 may comprise a memory subsystem and a file/disk storage subsystem 310.

When a user 302 utilizes the user computing device 304 to open one or more data files stored within the file storage subsystem 310, the one or more processors 312 may access one or more registry files within the file storage subsystem 310 to identify one or more applications 308 that may be used to open the selected one or more data files. For instance, the one or more registry files may specify that the selected one or more data files are to be opened using a location determination application installed on the computing device 304. The one or more registry files stored within the file storage subsystem may be provided by one or more administrators tasked with establishing user 302 permissions in utilizing the computing device 304.

These one or more registry files may further encode one or more policies, wherein the policies may specify whether the selected one or more data files selected by a user 302 of the computing device 304 may open these data files using an application 308 installed on the computing device 304. The location determination application may access these one or more policies encoded in the one or more registry files to determine whether the selected data files is to be opened within the computing device 304 environment. If the location determination application determines, based at least in part on these policies, that the one or more data files are not to be opened using an application 308 installed on the computing device 304 but instead must be opened using an application within a virtual computing environment, the location determination application may cause the one or more processors 312 to transmit one or more executable instructions to a network interface subsystem, which may provide an interface to a virtual computing environment service 314. The network interface subsystem may enable transmission of application 308 data and other information, such as electronic requests to access a system (e.g., receive a webpage) and may enable receipt of responses to the requests, such as webpages or other information.

Once the communications channel has been established between the computing device 304 and the virtual computing environment service 314, the one or more processors 312 may transmit executable instructions to the file storage subsystem 306 to transmit the one or more selected data files to the virtual computing environment service 314. Additionally, the one or more processors 312 may execute a user client application to enable the user 302 to utilize the computing device 304 to interact with the virtual computing environment provided by the virtual computing environment service 314. For instance, in an embodiment, the one or more processors 312 transmit executable instructions to the virtual computing environment service 314 that may cause the service to launch an application within the user's 302 virtual computing environment and open the one or more provided data files. When the user 302 finishes using the one or more data files within the virtual computing environment, the virtual computing environment service 314 may transmit the updated data files to the computing device 304, wherein the one or more processors 312 may synchronize these received data files with the data files stored within the file storage subsystem 310.

In an embodiment, the virtual computing environment service 314 determines, in response to a user 302 having selected one or more data files within his/her virtual computing environment, that no application is available within this environment to open the selected data files. The virtual computing environment service 314 may further determine, based at least in part on information specified within the user's 302 profile, that the computing device 304 includes the one or more applications 308 needed to open the selected data files. As a result, the virtual computing environment service 314 may transmit the one or more data files to the computing device 304, wherein the one or more processors 312 may store the received data files within the file storage subsystem 310. Further, the one or more processors 312 may launch the application 308 specified by the virtual computing environment service 314 and cause the application 308 to open the received one or more data files for use.

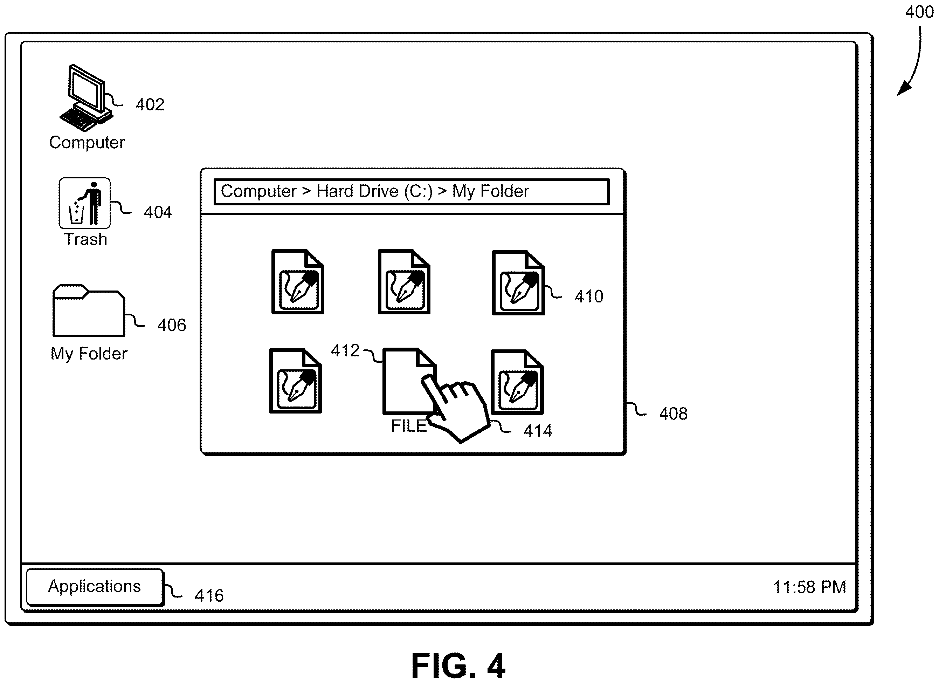

As noted above, a user, through a computing device may interact with an operating system interface to open one or more data files stored within the computing device. The operating system interface may be a GUI, which a user, through one or more user input devices installed on the computing device, may utilize to interact with one or more iconic graphical representations of applications, file structures, and data files stored within the computing device. Accordingly, FIG. 4 shows an illustrative example of a user's computing device environment 400 wherein a user can select one or more data files 412 stored within the computing device in accordance with at least one embodiment. The computing device environment 400 may be an operating system interface usable to interact with one or more data files and applications executable therein.

The computing device environment 400 may include one or more icons, which may represent one or more functions that may be performed within the computing device environment 400. For instance, as illustrated in FIG. 4, the computing device environment 400 may include a computer icon 402, which may be used to access a variety of storage devices (e.g., hard drives, etc.), peripheral devices (e.g., CD-ROM drives, DVD drives, etc.) and network devices. The computing device environment 400 may further include a trash icon 404, which may enable access to an application that may be used to remove one or more data files from the computing device environment 400. The computing device environment 400 may also include a folder icon 406, which may be used to access a particular data file container within a file structure of the computing device. It should be noted that the icons illustrated in FIG. 4 are not the only icons that may be available within the computing device environment 400 and additional and/or alternative icons may be provided for various functions within the computing device environment 400.

The computing device environment 400 may further include an applications button 416, which may be used to access one or more applications installed on the computing device. When a user selects an application upon engaging the applications button 416, the computing device may launch the application within a new environment panel, which may be displayed on the computing device environment 400. This may enable the user to interact with the application and request opening of one or more data files from within this environment panel.

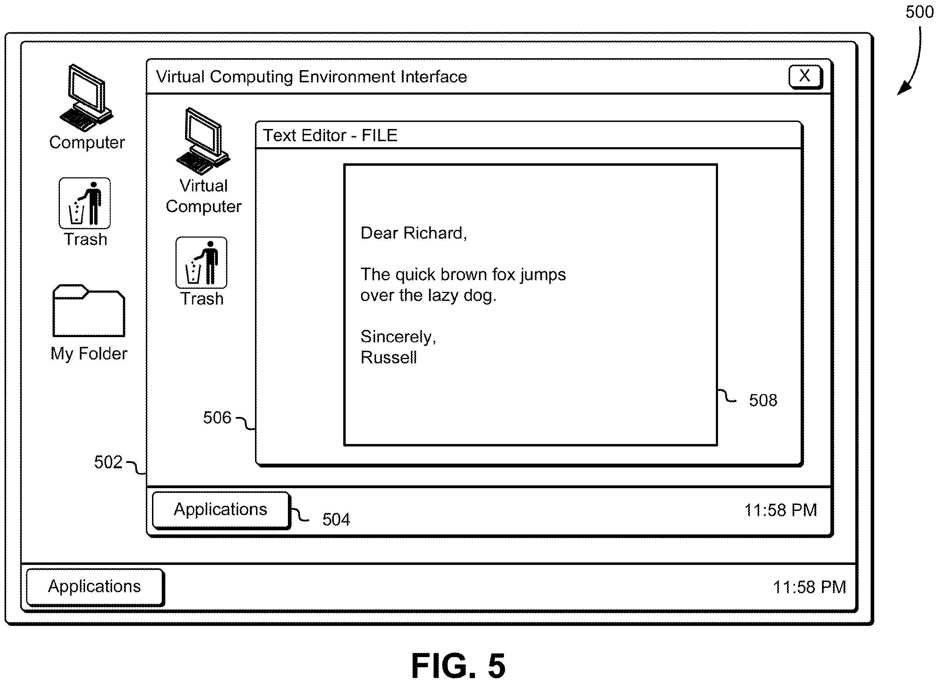

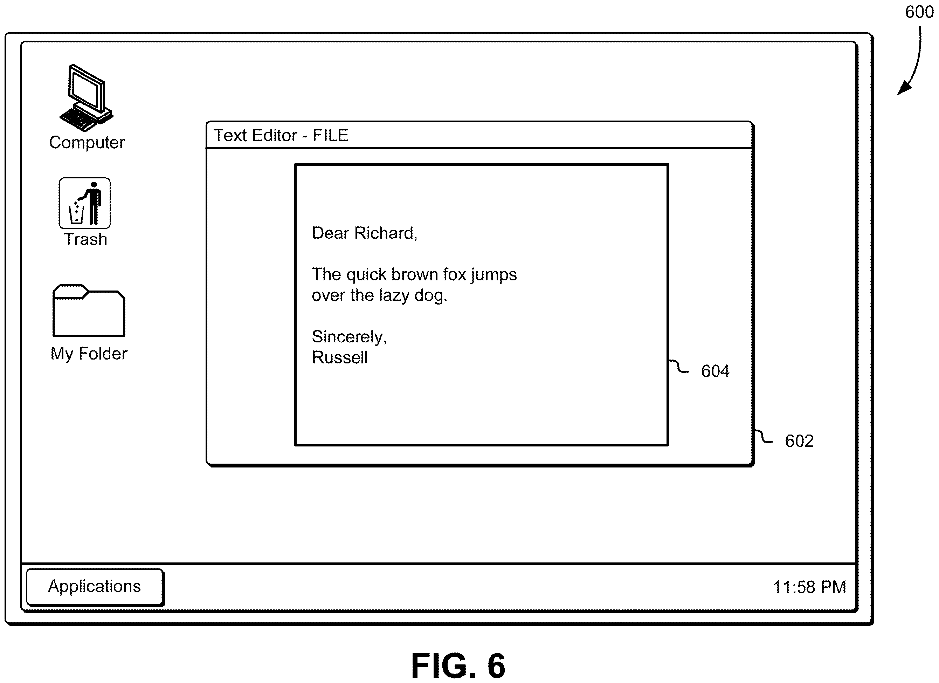

When a user selects, using a user interface device (e.g., a cursor 414), the folder icon 406, the one or more processors of the computing device may cause the computing device environment 400 to display an environment panel 408, which may include one or more iconic representations of one or more data files 410, 412 stored within the computing device. From these one or more iconic representations of the one or more data files 410, 412, a user may utilize a cursor 414 to select a particular data file 412 and request that the data file 412 be opened within the computing device environment 400. In response to this request, the computing device may determine, based at least in part on one or more registry files associated with the selected data file 412, which application may be used to open the selected data file 412. As will be described in greater detail below in connection with FIGS. 5 and 6, the selected data file 412 may be associated with a location determination application, which may determine whether the selected data file 412 is to be opened within the computing device environment 400 or within a virtual computing environment. It should be noted that, in some embodiments, the computing device environment 400 may also be a single-tenant desktop, usable only by a single user at a time.

As noted above, when a user selects one or more data files, the computing device may determine, based at least in part on one or more registry files associated with the one or more data files, which application may be launched to open the selected one or more data files. For instance, an administrator may specify, within the one or more registry files, that before the one or more data files may be opened, the computing device is to launch a location determination application. In some embodiments, this application may be determine, based at least in part on one or more policies encoded in the one or more registry files, that the one or more selected data files are to be opened within a remote virtual computing environment. Accordingly, FIG. 5 shows an illustrative example of a user's computing device environment 500 wherein the selected data file is utilized within a virtual computing environment through an interface 502 in response to a policy implementation in accordance with at least one embodiment.

When the location determination application determines, based at least in part on the one or more policies encoded in the one or more registry files, that the one or more selected data files are to be opened within a remote virtual computing environment, the computing device may launch a virtual computing environment interface 502, which may be used by the user to interact with a virtual computing environment. As noted above, the location determination application may cause the computing device to establish a communications channel with a virtual computing environment service to enable the user to access his/her virtual computing environment. For instance, the virtual computing environment service may receive, from the computing device, the one or more data files that are to be opened within the virtual computing environment. Further, the virtual computing environment service may receive executable instructions from the computing device, which may cause the virtual computing environment service to launch an application usable to open the selected one or more data files.

Once the connection between the virtual computing environment service and the computing device has been established, the virtual computing environment service may enable the user to utilize the virtual computing environment interface 502 within the computing device environment 500 to access the user's virtual computing environment. The virtual computing environment may include many of the features included within the computing device environment 500. For instance, the virtual computing environment may similarly include an applications button 504, which may be used by the user through the virtual computing environment interface 502 to select one or more applications that may be launched within the virtual computing environment. Additionally, the virtual computing environment may be based on a similar operating system as the operating system installed on the computing device, although, in some instances, the virtual computing environment may utilize a different operating system that is still capable of processing the one or more selected data files.

The virtual computing environment, upon execution of the application within this environment, may create an application panel 506, which may enable the user to interact with the application through the virtual computing environment interface 502. The one or more data files 508 may be presented to the user within this application panel 506, which may enable the user to create, delete, modify and otherwise alter the contents of the one or more data files 508. When the user has completed using the one or more data files 508, the user may terminate the application by closing the application panel 506. The virtual computing environment service may transmit the updated data files to the computing device, which may synchronize the received data files with the one or more data files stored therein.

As noted above, a user may utilize his/her computing device to open one or more data files using one or more applications installed on the computing device or within a virtual computing environment. For instance, when a user selects a data file within the computing device environment, the computing device may determine, based at least in part on associations encoded in one or more registry files, which application may be used to open the one or more data files. Alternatively, these one or more registry files may specify that the one or more data files are to be analyzed by a location determination application to determine whether the one or more data files are to be opened within the computing device environment or in a remote virtual computing environment. If the one or more data files are associated with an application other than the location determination application or the location determination application determines that the one or more data files are to be opened within the computing device environment, the computing device may launch an application within the computing device environment and enable the application to open these selected data files. Accordingly, FIG. 6 shows an illustrative example of a user's computing device environment 600 wherein the selected data file is utilized by launching an application within the computing device environment 600 in accordance with at least one embodiment. The computing device environment 600 may be similar to the computing device environment described above in connection with FIG. 4.

When the location determination application determines that the one or more data files selected by the user are to be opened using an application installed on the computing device or the one or more data files are associated with an application other than the location determination application, the computing device may launch an application within the computing device environment 600 that may be used to open the selected one or more data files. For instance, the application, upon being launched, may generate an application panel 602 within the computing device environment 600 that may enable the user to utilize one or more user interface devices (e.g., a cursor) to interact with the application. The application may populate the application panel 602 with the contents of the one or more selected data files 604, which may enable the user of the computing device to modify these contents as needed. Once the user has completed his/her use of the one or more data files 604, the user may terminate the application by closing the application panel 602. This may cause the computing device to save any changes to these one or more data files.

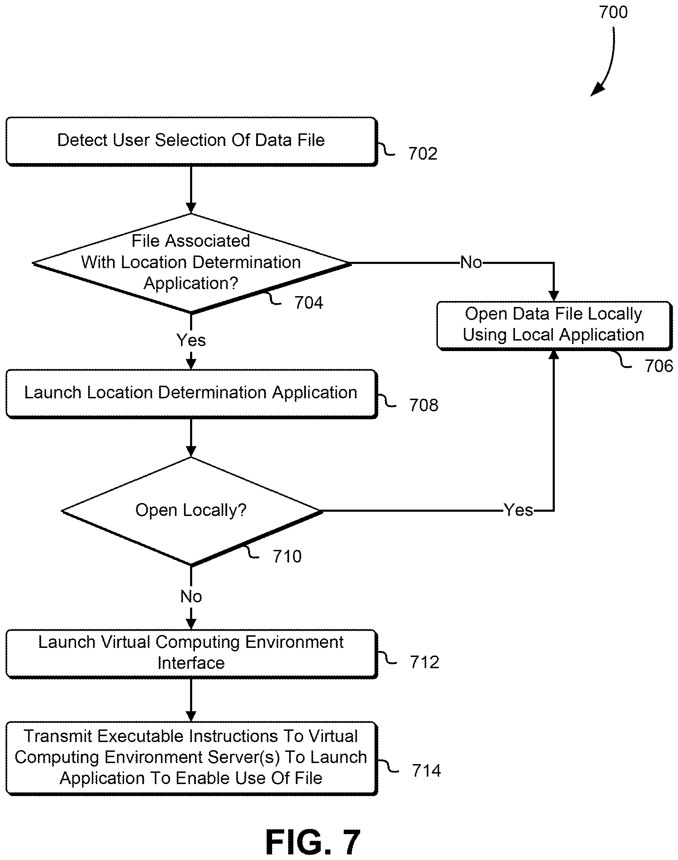

As noted above, when a user selects one or more data files stored within his/her computing device, the computing device may determine, based at least in part on one or more registry files, whether these one or more data files may require additional analysis through a location determination application to determine whether these one or more data files are to be accessed through the computing device environment or through a remote virtual computing environment. Alternatively, if the one or more data files are not associated with the location determination application, the computing device may launch an application installed on the computing device to open the one or more data files and enable their use through the computing device environment. Accordingly, FIG. 7 shows an illustrative example of a process 700 for determining the computing environment in which a selected data file may be utilized using an application in accordance with at least one embodiment. The process 700 may be performed by one or more processors of a computing device, wherein the one or more data files selected by a user may be stored.

When a user selects, through a computing device environment (e.g., operating system interface), one or more data files that he/she wants to open and use, the one or more processors may detect 702 the user's selection of these one or more data files and determine 704 whether these one or more data files are associated with a location determination application. For instance, the one or more processors may cause the computing device to access one or more registry files associated with the selected one or more files to determine which applications may be used to access these one or more data files. Further, the registry files may specify a default application that is to be used for the one or more data files. In an embodiment, an administrator of the computing device generates the one or more registry files and encodes, within these registry files, that one or more data files are to be associated with a location determination application by default.

In an alternative embodiment, a user selects a batch of one or more data files, which may be of different file types. The one or more processors, in response to detecting the user's selection of this batch of one or more files, may determine 704, for each file of the batch of one or more files, whether the data file is associated with the location determination application. For instance, the one or more processors may evaluate one or more registry files associated with each data file of the batch of one or more data files to determine which applications are to be used to access these one or more data files. Based at least in part on these one or more registry files, the one or more processors may launch the location determination application and/or other applications within the local computing environment for each data file of the batch of one or more data files.

If the one or more processors determine that the selected one or more data files are not associated with the location determination application, the one or more processors may cause the computing device to open 706 the selected one or more data files by using a local (e.g., relative to the computing device) application installed on the computing device. For instance, the one or more processors may cause the computing device to launch the application installed on the computing device and enable the user to utilize the application to access the selected one or more data files. However, if the one or more data files are associated with the location determination application, the one or more processors may cause the computing device to launch 708 the location determination application in order to determine 710 whether the selected one or more data files are to be opened locally using an application installed on the computing device.

As noted above, the location determination application may be configured to evaluate one or more policies encoded in the one or more registry files associated with the selected one or more data files to determine whether these data files are to be opened locally within the computing device environment or if these data files may only be opened in a remote virtual computing environment. If the location determination application determines that the one or more data files are to be opened locally, the application may transmit this determination to the one or more process, which, in response, may cause the computing device to open 706 the selected one or more data files by using a local application installed on the computing device.

If the one or more data files cannot be opened locally, the one or more processors may launch 712 a virtual computing environment interface, such as the interface illustrated in FIG. 5, to access the virtual computing environment service and enable the user to access his/her virtual computing environment wherein the one or more data files may be opened. For instance, the one or more processors may transmit executable instructions to a network interface subsystem of the computing device, which may cause the network interface subsystem to establish a communications channel with the virtual computing environment service. Subsequently, the one or more processors may provide the virtual computing environment service with the one or more user credentials necessary to access the user's virtual computing environment. This may enable the virtual computing environment service to authenticate the user and provide access to the user's virtual computing environment. Additionally, the one or more processors may transmit the selected one or more data files to the virtual computing environment service to enable their use within the virtual computing environment. In an alternative embodiment, the one or more processors transmits a request to the virtual computing environment service to provision a virtual machine instance that may be used to generate the virtual computing environment.

Once the virtual computing environment interface has been launched, the one or more processors may transmit 714 executable instructions to the virtual computing environment servers to launch the appropriate application within the virtual computing environment to open the one or more data files. This may cause the virtual computing environment service to launch the application and open the one or more data files within the virtual computing environment. Further, this may enable the user, through the virtual computing environment interface, to interact with this remote application and utilize the one or more opened data files.

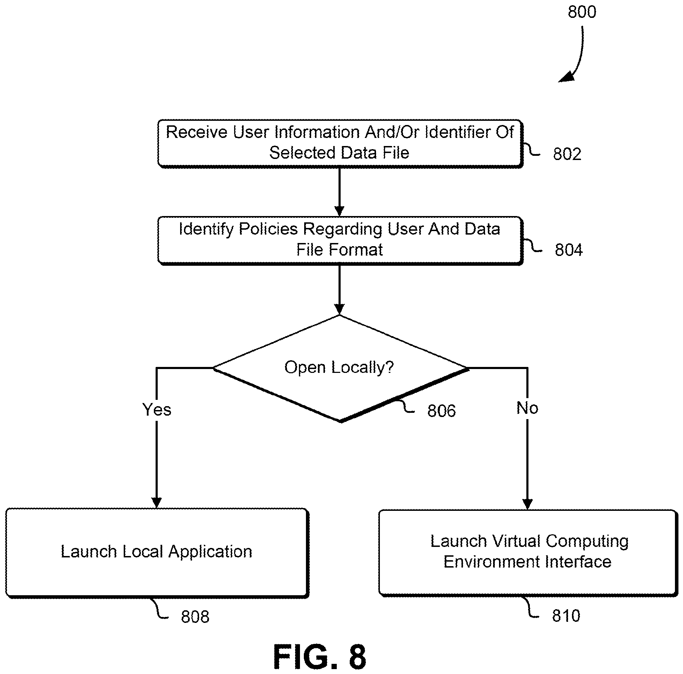

As noted above, one or more data files stored within the user's computing device may be associated with a location determination application, which may be configured to determine whether the one or more data files are to be opened locally within the computing device environment or within a remote virtual computing environment. Accordingly, FIG. 8 shows an illustrative example of a process 800 for utilizing one or more policies to determine a computing environment wherein a selected data file may be opened in accordance with at least one embodiment. The process 800 may be performed by the aforementioned location determination application, which may be configured to access one or more registry files associated with the selected one or more data files and user policies to determine where the one or more data files are to be opened. Further, the location determination application may be configured to interact with one or more processors of the computing device to launch other applications with the local computing device environment or to launch a virtual computing environment interface to enable access to the one or more data files within a remote virtual computing environment.

As described above in connection with FIG. 7, one or more processors of the computing device, upon detection that the user has selected one or more data files, may determine whether the one or more data files are to be analyzed by the location determination application. For instance, the one or more processors may cause the computing device to access one or more registry files associated with the selected one or more data files to determine the default application to be launched when the one or more data files are selected. If the one or more registry files specify that the default application to be launched is the location determination application, the one or more processors may launch this application to perform the analysis of the one or more data files.

When the location determination application is launched, the application may receive 802, from the one or more processors, user information and/or identifiers of the selected one or more data files. The user information and/or identifiers of the selected one or more data files may enable the location determination application to identify one or more registry files stored within the computing device that may be associated with the selected one or more data files. Further, the user information and/or identifiers of the selected one or more data files may enable the location determination application to identify 804 any relevant policies encoded in these one or more registry files regarding the particular user and the file format of the selected one or more data files. For instance, the one or more policies may specify whether the particular data file format may be used within the user's computer device. Additionally, the one or more policies may specify that, for a particular user, the one or more data files may not be opened using any application installed on the computing device but, rather, that the one or more data files may only be accessed through a virtual computing environment. By evaluating these one or more policies, the location determination application may be able to determine 806 whether the selected one or more data files are to be opened locally.

If the location determination application determines, based at least in part on the one or more policies, that the one or more data files are to be opened locally, the location determination application may cause the one or more processors to launch 808 a local application within the computing device environment such that the local application may open the one or more data files and enable the user to utilize these one or more data files through the local application. Alternatively, if the location determination application determines that the one or more data files are to be opened within a remote virtual computing environment, the location determination application may cause the one or more processors to launch 810 a virtual computing environment interface, which may enable the user to utilize his/her computing device to access his/her virtual computing environment and open the one or more data files within the virtual computing environment.

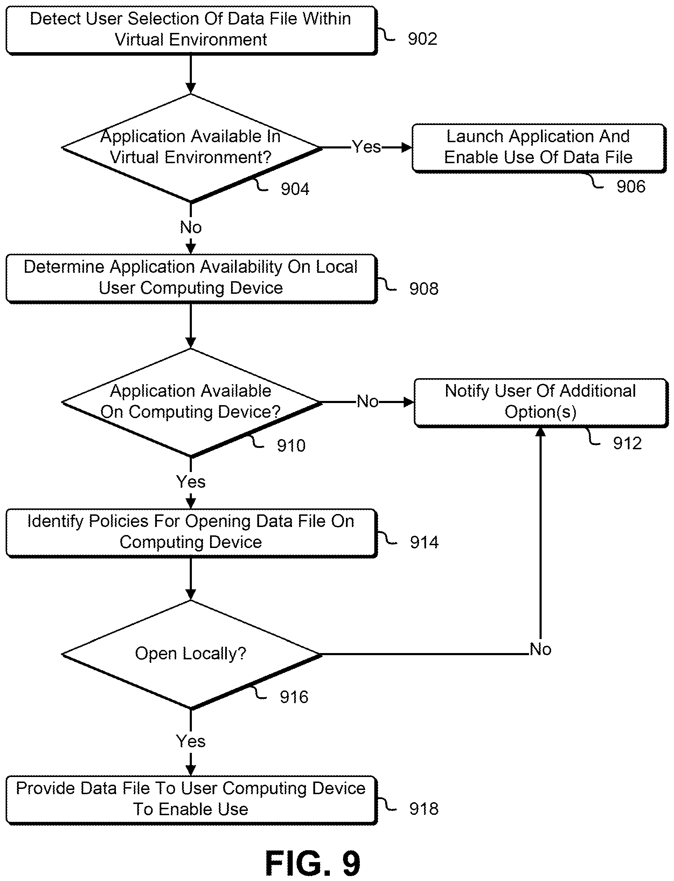

As noted above, a user may utilize the virtual computing environment interface to select one or more data files stored within a virtual computing environment. The virtual computing environment may include one or more applications that may be used to open the one or more data files. However, in some embodiments, the virtual computing environment may not include an application that is necessary to open the selected one or more data files. In such instances, a management sub-system of the virtual computing environment service may need to determine whether the user's computing device or other computing environment includes the suitable application. Further, the service may need to determine whether the user is authorized to open these data files within any of these environments. Accordingly, FIG. 9 shows an illustrative example of a process 900 for transferring a data file to a different computing environment in response to determining that an application is unavailable for using the data file in accordance with at least one embodiment. The process 900 may performed by the aforementioned virtual computing environment service, which may be configured to evaluate one or more policies applicable to the user and to interact with one or more computing environments.

When a user interacts with the virtual computing environment, he/she may select one or more data files that may be stored within this environment. This may enable the virtual computing environment service to detect 902 user selection of the one or more data files within the virtual computing environment and determine 904 whether an application is available within this environment that may be launched to open the selected data files. For instance, the virtual computing system service may evaluate the virtual machine image used to generate the virtual computing environment to determine which applications are included within the environment. If an application is available within the virtual computing environment that may be used to open the selected one or more data files, the virtual computing environment service may launch 906 the appropriate application and enable use of the one or more data files through the virtual computing environment interface.

If no application is available within the virtual computing environment, the virtual computing environment service may determine 908 whether the user's computing device (e.g., local computing device environment) includes one or more applications that may be used to open the selected one or more data files. For instance, the virtual computing environment service may access a user profiles data store to identify a user profile associated with the user of the virtual computing environment. This user profile may specify one or more applications that may be installed on the user's computing device. Alternatively, the virtual computing environment service may transmit one or more API calls to the user's computing device to request information regarding the one or more applications installed on the computing device. Either method may enable the virtual computing environment service to determine 910 whether the needed application is installed on the user's computing device.

The virtual computing environment service may notify 912 the user of any additional options for opening the one or more data files if the computing device does not include an application that may be used to open the one or more data files. For instance, in some embodiments, the virtual computing system service may notify the user of other virtual machine images that may include the one or more suitable applications for opening the selected one or more data files and allow the user to determine whether he/she would like this particular virtual machine image to be instantiated on a physical host. Alternatively, the virtual computing environment service may deny the user's request to open the one or more data files as no application could be located. In an alternative embodiment, the virtual computing environment service may enable the user to access a virtual computing environment application marketplace, wherein the user may be able to obtain a license to one or more applications needed to open the one or more data files. Upon obtaining the license from this marketplace, the virtual computing environment service may supplement the user's virtual computing environment by installing the one or more applications and enabling the user to utilize these one or more applications so long as the license is valid.

Alternatively, if the one or more applications required to open the one or more data files are available within the user's computing device, the virtual computing environment service may identify 914 one or more policies for opening the selected one or more data files within the user's computing device environment. For instance, the virtual computing environment service may access the user's profile within the user profiles data store to identify these one or more policies, as defined by an administrator of the computing device or other supervisory authority. The one or more policies may specify which data file types or formats may be opened within the user's computing device environment and/or may not be opened within this environment. Based at least in part on these one or more policies, the virtual computing environment service may determine 916 whether the selected one or more data files may be opened using an application installed on the user's computing device.

As a result of determining that the one or more data files may not be opened within the user's computing device environment, the virtual computing environment service may notify 912 the user of any additional options for opening the one or more data files. However, if the one or more data files may be opened within the user's computing device environment, the virtual computing environment service may provide 918 the selected one or more data files to the user's computing device and transmit one or more executable instructions to the computing device that, when executed, may cause the computing device to launch the one or more applications necessary to enable use of the one or more data files within the user's computing device environment.

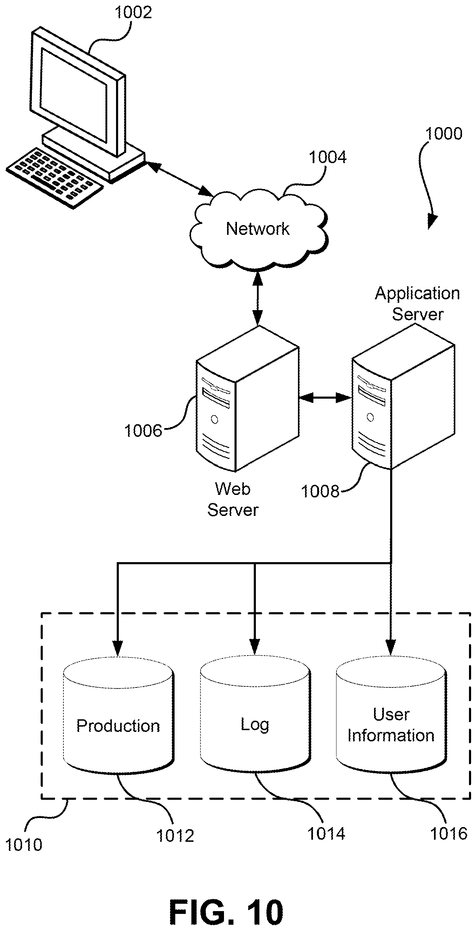

FIG. 10 illustrates aspects of an example environment 1000 for implementing aspects in accordance with various embodiments. As will be appreciated, although a web-based environment is used for purposes of explanation, different environments may be used, as appropriate, to implement various embodiments. The environment includes an electronic client device 1002, which can include any appropriate device operable to send and/or receive requests, messages or information over an appropriate network 1004 and, in some embodiments, convey information back to a user of the device. Examples of such client devices include personal computers, cell phones, handheld messaging devices, laptop computers, tablet computers, set-top boxes, personal data assistants, embedded computer systems, electronic book readers and the like. The network can include any appropriate network, including an intranet, the Internet, a cellular network, a local area network, a satellite network or any other such network and/or combination thereof. Components used for such a system can depend at least in part upon the type of network and/or environment selected. Protocols and components for communicating via such a network are well known and will not be discussed herein in detail. Communication over the network can be enabled by wired or wireless connections and combinations thereof. In this example, the network includes the Internet, as the environment includes a web server 1006 for receiving requests and serving content in response thereto, although for other networks an alternative device serving a similar purpose could be used as would be apparent to one of ordinary skill in the art.

The illustrative environment includes at least one application server 1008 and a data store 1010. It should be understood that there can be several application servers, layers or other elements, processes or components, which may be chained or otherwise configured, which can interact to perform tasks such as obtaining data from an appropriate data store. Servers, as used herein, may be implemented in various ways, such as hardware devices or virtual computer systems. In some contexts, servers may refer to a programming module being executed on a computer system. As used herein, unless otherwise stated or clear from context, the term "data store" refers to any device or combination of devices capable of storing, accessing and retrieving data, which may include any combination and number of data servers, databases, data storage devices and data storage media, in any standard, distributed, virtual or clustered environment. The application server can include any appropriate hardware, software and firmware for integrating with the data store as needed to execute aspects of one or more applications for the client device, handling some or all of the data access and business logic for an application. The application server may provide access control services in cooperation with the data store and is able to generate content including, but not limited to, text, graphics, audio, video and/or other content usable to be provided to the user, which may be served to the user by the web server in the form of HyperText Markup Language ("HTML"), Extensible Markup Language ("XML"), JavaScript, Cascading Style Sheets ("CSS") or another appropriate client-side structured language. Content transferred to a client device may be processed by the client device to provide the content in one or more forms including, but not limited to, forms that are perceptible to the user audibly, visually and/or through other senses including touch, taste, and/or smell. The handling of all requests and responses, as well as the delivery of content between the client device 1002 and the application server 1008, can be handled by the web server using PHP: Hypertext Preprocessor ("PHP"), Python, Ruby, Perl, Java, HTML, XML or another appropriate server-side structured language in this example. It should be understood that the web and application servers are not required and are merely example components, as structured code discussed herein can be executed on any appropriate device or host machine as discussed elsewhere herein. Further, operations described herein as being performed by a single device may, unless otherwise clear from context, be performed collectively by multiple devices, which may form a distributed and/or virtual system.

The data store 1010 can include several separate data tables, databases, data documents, dynamic data storage schemes and/or other data storage mechanisms and media for storing data relating to a particular aspect of the present disclosure. For example, the data store illustrated may include mechanisms for storing production data 1012 and user information 1016, which can be used to serve content for the production side. The data store also is shown to include a mechanism for storing log data 1014, which can be used for reporting, analysis or other such purposes. It should be understood that there can be many other aspects that may need to be stored in the data store, such as page image information and access rights information, which can be stored in any of the above listed mechanisms as appropriate or in additional mechanisms in the data store 1010. The data store 1010 is operable, through logic associated therewith, to receive instructions from the application server 1008 and obtain, update or otherwise process data in response thereto. The application server 1008 may provide static, dynamic or a combination of static and dynamic data in response to the received instructions. Dynamic data, such as data used in web logs (blogs), shopping applications, news services and other such applications may be generated by server-side structured languages as described herein or may be provided by a content management system ("CMS") operating on, or under the control of, the application server. In one example, a user, through a device operated by the user, might submit a search request for a certain type of item. In this case, the data store might access the user information to verify the identity of the user and can access the catalog detail information to obtain information about items of that type. The information then can be returned to the user, such as in a results listing on a web page that the user is able to view via a browser on the user device 1002. Information for a particular item of interest can be viewed in a dedicated page or window of the browser. It should be noted, however, that embodiments of the present disclosure are not necessarily limited to the context of web pages, but may be more generally applicable to processing requests in general, where the requests are not necessarily requests for content.

Each server typically will include an operating system that provides executable program instructions for the general administration and operation of that server and typically will include a computer-readable storage medium (e.g., a hard disk, random access memory, read only memory, etc.) storing instructions that, when executed by a processor of the server, allow the server to perform its intended functions. Suitable implementations for the operating system and general functionality of the servers are known or commercially available and are readily implemented by persons having ordinary skill in the art, particularly in light of the disclosure herein.

The environment, in one embodiment, is a distributed and/or virtual computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in FIG. 10. Thus, the depiction of the system 1000 in FIG. 10 should be taken as being illustrative in nature and not limiting to the scope of the disclosure.

The various embodiments further can be implemented in a wide variety of operating environments, which in some cases can include one or more user computers, computing devices or processing devices which can be used to operate any of a number of applications. User or client devices can include any of a number of general purpose personal computers, such as desktop, laptop or tablet computers running a standard operating system, as well as cellular, wireless and handheld devices running mobile software and capable of supporting a number of networking and messaging protocols. Such a system also can include a number of workstations running any of a variety of commercially-available operating systems and other known applications for purposes such as development and database management. These devices also can include other electronic devices, such as dummy terminals, thin-clients, gaming systems and other devices capable of communicating via a network. These devices also can include virtual devices such as virtual machines, hypervisors and other virtual devices capable of communicating via a network.

Various embodiments of the present disclosure utilize at least one network that would be familiar to those skilled in the art for supporting communications using any of a variety of commercially-available protocols, such as Transmission Control Protocol/Internet Protocol ("TCP/IP"), User Datagram Protocol ("UDP"), protocols operating in various layers of the Open System Interconnection ("OSI") model, File Transfer Protocol ("FTP"), Universal Plug and Play ("UpnP"), Network File System ("NFS"), Common Internet File System ("CIFS") and AppleTalk. The network can be, for example, a local area network, a wide-area network, a virtual private network, the Internet, an intranet, an extranet, a public switched telephone network, an infrared network, a wireless network, a satellite network and any combination thereof.

In embodiments utilizing a web server, the web server can run any of a variety of server or mid-tier applications, including Hypertext Transfer Protocol ("HTTP") servers, FTP servers, Common Gateway Interface ("CGI") servers, data servers, Java servers, Apache servers and business application servers. The server(s) also may be capable of executing programs or scripts in response to requests from user devices, such as by executing one or more web applications that may be implemented as one or more scripts or programs written in any programming language, such as Java^{®}, C, C# or C++, or any scripting language, such as Ruby, PHP, Perl, Python or TCL, as well as combinations thereof. The server(s) may also include database servers, including without limitation those commercially available from Oracle^{®}, Microsoft^{®}, Sybase^{®} and IBM^{®} as well as open-source servers such as MySQL, Postgres, SQLite, MongoDB, and any other server capable of storing, retrieving and accessing structured or unstructured data. Database servers may include table-based servers, document-based servers, unstructured servers, relational servers, non-relational servers or combinations of these and/or other database servers.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit ("CPU" or "processor"), at least one input device (e.g., a mouse, keyboard, controller, touch screen or keypad) and at least one output device (e.g., a display device, printer or speaker). Such a system may also include one or more storage devices, such as disk drives, optical storage devices and solid-state storage devices such as random access memory ("RAM") or read-only memory ("ROM"), as well as removable media devices, memory cards, flash cards, etc.

Such devices also can include a computer-readable storage media reader, a communications device (e.g., a modem, a network card (wireless or wired), an infrared communication device, etc.) and working memory as described above. The computer-readable storage media reader can be connected with, or configured to receive, a computer-readable storage medium, representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs, such as a client application or web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and computer readable media for containing code, or portions of code, can include any appropriate media known or used in the art, including storage media and communication media, such as, but not limited to, volatile and non-volatile, removable and non-removable media implemented in any method or technology for storage and/or transmission of information such as computer readable instructions, data structures, program modules or other data, including RAM, ROM, Electrically Erasable Programmable Read-Only Memory ("EEPROM"), flash memory or other memory technology, Compact Disc Read-Only Memory ("CD-ROM"), digital versatile disk (DVD) or other optical storage, magnetic cassettes, magnetic tape, magnetic disk storage or other magnetic storage devices or any other medium which can be used to store the desired information and which can be accessed by the system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense.

Thus, while the disclosed techniques are susceptible to various modifications and alternative constructions, certain illustrated embodiments thereof are shown in the drawings and have been described above in detail.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including" and "containing" are to be construed as open-ended terms (i.e., meaning "including, but not limited to,") unless otherwise noted. The term "connected," when unmodified and referring to physical connections, is to be construed as partly or wholly contained within, attached to or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present.

Operations of processes described herein can be performed in any suitable order unless otherwise indicated herein or otherwise clearly contradicted by context. Processes described herein (or variations and/or combinations thereof) may be performed under the control of one or more computer systems configured with executable instructions and may be implemented as code (e.g., executable instructions, one or more computer programs or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Embodiments of this disclosure are described herein, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

## Claims

1. A computer-implemented method comprising:
under the control of a computing device configured with executable instructions,
detecting (702) input into an input device of the computing device indicating a command to open a data file, the data file accessible using at least one application installed on the computing device and the data file having a corresponding file type;
determining (704), using an operating system installed on the computing device, that a default application associated with the corresponding file type is a location determination application;
executing (708) the location determination application as the default application for the file type;
determining (710), using the location determination application and based on a policy associated with the file type, whether the data file is to be opened locally using the at least one application installed on the computing device or in a virtual computing environment distinct from the environment of the computing device;
based on determining that the data file is to be opened in the virtual computing environment, providing the data file to the virtual computing environment; and
transmitting (714) one or more executable instructions to cause the virtual computing environment to launch an appropriate application usable to open the data file within the virtual computing environment.

2. The computer-implemented method of claim 1, further comprising:
receiving, from the virtual computing environment, a modified data file, the modified data file created as a result of the data file being opened using the appropriate application within the virtual computing environment; and
synchronizing the data file and the modified data file.

3. The computer-implemented method of claim 1, wherein the policy is encoded in a registry file of an operating system of the computer system, the registry file specifying that data files having the corresponding file type are to be associated with the location determination application configured to determine that the data files are to be opened in the virtual computing environment.

4. The computer-implemented method of claim 1, further comprising, as a result of determining that the data file is to be opened in the virtual computing environment, providing one or more credentials associated with a user of the computing device to enable the computing device to be used to access the virtual computing environment.

5. A system, comprising:
one or more processors (312);
memory (306) including instructions that, when executed by the one or more processors, cause the system to:
detect, in a first computing environment, a command to open a data file (412), the data file being accessible using at least one application installed on the first computing environment and the data file having a corresponding file type;
determine (704), using an operating system installed on the first computing environment, that a default application associated with the corresponding file type is a location determination application;
execute (708) the location determination application as the default application for the file type;
determine (710), using the location determination application and based on a policy associated with the data file, whether the data file is to be opened locally using the at least one application installed on the first computing environment or in a second computing environment, the first computing environment and second computing environment separated by a network;
based on determining that the data file is to be opened in the second computing environment, provide the data file to the second computing environment;
transmit (714) information to the second computing environment that causes the data file to be opened within the second computing environment.

6. The system of claim 5, wherein the policy is encoded in a registry file associated with the data file.

7. The system of claim 5, wherein the instructions, when executed by the one or more processors, further cause the system to:
detect, in the first computing environment, a command to open a second data file;
determine, based at least in part on a policy associated with the second data file, that the second data file is to be opened using an application within the first computing environment; and
launch the application to enable use of the second data file.

8. The system of claim 5, wherein the first computing environment is a single-tenant virtual computing environment streamed to the system over the network.

9. The system of claim 5, wherein the instructions, when executed by the one or more processors, further cause the system to:
receive, from the second computing environment, a modified data file, the modified data file created as a result of the data file being opened using the application within the second computing environment; and
synchronize the data file and the modified data file within the first computing environment.

10. A non-transitory computer-readable storage medium having stored thereon executable instructions that, when executed by one or more processors of a computer system, cause the computer system to at least:
in response to detecting (702), within a first computing environment, a command to open a data file, the data file accessible using at least one application installed on the first computing environment and the data file having a corresponding file type,
determine (704), using an operating system installed on the first computing environment, that a default application associate with the corresponding file type is a location determination application;
execute (708) the location determination application as the default application for the file type;
select (710), based on a policy associated with the file type, a selected single-tenant virtual computing environment from a plurality of single-tenant virtual computing environments accessible to the computer system for opening the data file;
based on determining that the data file is to be opened in the selected computing environment, providing the data file to the selected single-tenant virtual computing environment; and
transmit (714) information to the selected single-tenant virtual computing environment that causes the data file to be opened within the selected single-tenant virtual computing environment.

11. The non-transitory computer-readable storage medium of claim 10, wherein the executable instructions further comprise instructions that, when executed by the one or more processors, cause the computer system to provide one or more credentials associated with a user computing device of the first computing environment to enable the user computing device to access the selected single-tenant virtual computing environment.

12. The non-transitory computer-readable storage medium of claim 10, wherein the first computing environment includes an operating system that is distinct from an operating system of the selected single-tenant virtual computing environment.

13. The non-transitory computer-readable storage medium of claim 10, wherein the executable instructions further include instructions that, when executed by the one or more processors, cause the computer system to, as a result of selecting the single-tenant virtual computing environment from the plurality of single-tenant virtual computing environments, transmit information that causes the selected single-tenant virtual computing environment to be provisioned.

14. The non-transitory computer-readable storage medium of claim 10, wherein the policy associated with the file type specifies an ordering of the single-tenant virtual computing environments based at least in part on one or more security aspects of each single-tenant virtual environment of the plurality of single-tenant virtual computing environments.

15. The non-transitory computer-readable storage medium of claim 10, wherein the policy is encoded in a registry file of an operating system of the first computing environment, the registry file specifying that data files having the corresponding file type are to be associated with the location determination application configured to determine that the data files are to be opened in the selected single-tenant virtual computing environment.

## Patentansprüche

1. Computerimplementiertes Verfahren, umfassend:
unter der Steuerung von einem Rechnersystem, das mit ausführbaren Anweisungen konfiguriert ist,
Erkennen (702) von Eingabe in eine Eingabevorrichtung der Rechnervorrichtung, die einen Befehl zum Öffnen einer Datendatei angibt, wobei die Datendatei unter Verwendung mindestens einer Anwendung, die auf der Rechnervorrichtung installiert ist, zugänglich ist und die Datendatei einen entsprechenden Dateityp aufweist;
Bestimmen (704), unter Verwendung eines Betriebssystems, das auf der Rechnervorrichtung installiert ist, dass eine Standardanwendung, die dem entsprechenden Dateityp zugeordnet ist, eine Standortbestimmungsanwendung ist;
Ausführen (708) der Standortbestimmungsanwendung als die Standardanwendung für den Dateityp;
Bestimmen (710), unter Verwendung der Standortbestimmungsanwendung und basierend auf einer Richtlinie, die dem Dateityp zugeordnet ist, ob die Datendatei lokal unter Verwendung der mindestens einen Anwendung, die auf der Rechnervorrichtung installiert ist, oder in einer virtuellen Rechnerumgebung, die sich von der Umgebung der Rechnervorrichtung unterscheidet, geöffnet werden soll;
basierend auf Bestimmen, dass die Datendatei in der virtuellen Rechnerumgebung geöffnet werden soll, Bereitstellen der Datendatei in der virtuellen Rechnerumgebung; und
Übertragen (714) einer oder mehrerer ausführbarer Anweisungen, um die virtuelle Rechnerumgebung zu veranlassen, eine geeignete Anwendung zu starten, die zum Öffnen der Datendatei innerhalb der virtuellen Rechnerumgebung verwendet werden kann.

2. Computerimplementiertes Verfahren nach Anspruch 1, ferner umfassend:
Empfangen einer modifizierten Datendatei von der virtuellen Rechnerumgebung, wobei die modifizierte Datendatei erstellt wurde, als Ergebnis dessen, dass die Datendatei unter Verwendung der geeigneten Anwendung innerhalb der virtuellen Rechnerumgebung geöffnet wurde; und
Synchronisieren der Datendatei und der modifizierten Datendatei.

3. Computerimplementiertes Verfahren nach Anspruch 1, wobei die Richtlinie in einer Registrierungsdatei eines Betriebssystems des Rechnersystems codiert ist, wobei die Registrierungsdatei spezifiziert, dass Datendateien, die den entsprechenden Dateityp aufweisen, der Standortbestimmungsanwendung zugeordnet werden sollen, die dazu konfiguriert ist zu bestimmen, dass die Datendateien in der virtuellen Rechnerumgebung geöffnet werden sollen.

4. Computerimplementiertes Verfahren nach Anspruch 1, ferner umfassend als Ergebnis des Bestimmens, dass die Datei in der virtuellen Rechnerumgebung geöffnet werden soll, Bereitstellen eines oder mehrerer Zugangsdaten, die einem Benutzer der Rechnervorrichtung zugeordnet sind, damit die Rechnervorrichtung für den Zugriff auf die virtuelle Rechnerumgebung verwendet werden kann.

5. System, umfassend:
einen oder mehrere Prozessoren (312);
Speicher (306), beinhaltend Anweisungen, die, wenn sie von dem einen oder mehreren Prozessoren ausgeführt werden, das System veranlassen zum:
Erkennen eines Befehls zum Öffnen einer Datendatei (412) in einer ersten Rechnerumgebung, wobei die Datendatei unter Verwendung mindestens einer Anwendung, die in der ersten Rechnerumgebung installiert ist, zugänglich ist und die Datendatei einen entsprechenden Dateityp aufweist;
Bestimmen (704), unter Verwendung eines Betriebssystems, das auf der ersten Rechnerumgebung installiert ist, dass eine Standardanwendung, die dem entsprechenden Dateityp zugeordnet ist, eine Standortbestimmungsanwendung ist;
Ausführen (708) der Standortbestimmungsanwendung als die Standardanwendung für den Dateityp;
Bestimmen (710), unter Verwendung der Standortbestimmungsanwendung und basierend auf einer Richtlinie, die der Datendatei zugeordnet ist, ob die Datendatei lokal unter Verwendung der mindestens einen Anwendung, die auf der ersten Rechnerumgebung installiert ist, oder in einer zweiten Rechnerumgebung geöffnet werden soll, wobei die erste Rechnerumgebung und die zweite Rechnerumgebung durch ein Netzwerk getrennt sind;
basierend auf Bestimmen, dass die Datendatei in der zweiten Rechnerumgebung geöffnet werden soll, Bereitstellen der Datendatei in der zweiten Rechnerumgebung;
Übertragen (714) von Informationen an die zweite Rechnerumgebung, die bewirken, dass die Datendatei innerhalb der zweiten Rechnerumgebung geöffnet werden soll.

6. System nach Anspruch 5, wobei die Richtlinie in einer Registrierungsdatei codiert ist, die der Datendatei zugeordnet ist.

7. System nach Anspruch 5, wobei die Anweisungen, wenn sie von dem einen oder den mehreren Prozessoren ausgeführt werden, das System ferner veranlassen zum:
Erkennen eines Befehls zum Öffnen einer zweiten Datendatei in der ersten Rechnerumgebung;
Bestimmen, basierend mindestens teilweise auf einer Richtlinie, die der zweiten Datendatei zugeordnet ist, dass die zweite Datendatei unter Verwendung einer Anwendung innerhalb der ersten Rechnerumgebung geöffnet werden soll; und
Starten der Anwendung, um die Verwendung der zweiten Datendatei zu ermöglichen.

8. System nach Anspruch 5, wobei die erste Rechnerumgebung eine virtuelle Einzelmandanten-Rechnerumgebung ist, die über das Netzwerk zu dem System gestreamt wird.

9. System nach Anspruch 5, wobei die Anweisungen, wenn sie von dem einen oder den mehreren Prozessoren ausgeführt werden, das System ferner veranlassen zum:
Empfangen einer modifizierten Datendatei von der zweiten Rechnerumgebung, wobei die modifizierte Datendatei erstellt wurde, als Ergebnis dessen, dass die Datendatei unter Verwendung der Anwendung innerhalb der zweiten Rechnerumgebung geöffnet wurde; und
Synchronisieren der Datendatei und der modifizierten Datendatei innerhalb der ersten Rechnerumgebung.

10. Nichtflüchtiges, computerlesbares Speichermedium, das ausführbare Anweisungen aufweist, die, wenn sie von einem oder mehreren Prozessoren eines Rechnersystems ausgeführt werden, das Rechnersystem mindestens veranlassen zum:
als Reaktion auf Erkennen (702) eines Befehls zum Öffnen einer Datendatei innerhalb einer ersten Rechnerumgebung, wobei die Datendatei unter Verwendung mindestens einer Anwendung zugänglich ist, die in der ersten Rechnerumgebung installiert ist, und die Datendatei einen entsprechenden Dateityp aufweist,
Bestimmen (704), unter Verwendung eines Betriebssystems, das auf der ersten Rechnerumgebung installiert ist, dass eine Standardanwendung, die dem entsprechenden Dateityp zugeordnet ist, eine Standortbestimmungsanwendung ist;
Ausführen (708) der Standortbestimmungsanwendung als die Standardanwendung für den Dateityp;
Auswählen (710) einer ausgewählten virtuellen Einzelmandanten-Rechnerumgebung aus einer Vielzahl von virtuellen Einzelmandanten-Rechnerumgebungen, auf die das Rechnersystem zugreifen kann, um die Datei zu öffnen, basierend auf einer Richtlinie, die dem Dateityp zugeordnet ist;
basierend auf Bestimmen, dass die Datendatei in der ausgewählten Rechnerumgebung geöffnet werden soll, Bereitstellen der Datendatei in der ausgewählten virtuellen Einzelmandanten-Rechnerumgebung; und
Übertragen (714) von Informationen an die ausgewählte, virtuelle Einzelmandanten-Rechnerumgebung, die bewirken, dass die Datendatei innerhalb der ausgewählten virtuellen Einzelmandanten-Rechnerumgebung geöffnet werden soll.

11. Nichtflüchtiges, computerlesbares Speichermedium nach Anspruch 10, wobei die ausführbaren Anweisungen ferner Anweisungen umfassen, die, wenn sie von dem einen oder den mehreren Prozessoren ausgeführt werden, das Computersystem dazu veranlassen, einen oder mehrere Zugangsdaten bereitzustellen, die einer Benutzer-Rechnervorrichtung der ersten Rechnerumgebung zugeordnet sind, um der Benutzer-Rechnervorrichtung den Zugriff auf die ausgewählte virtuelle Einzelmandanten-Rechnerumgebung zu ermöglichen.

12. Nichtflüchtiges, computerlesbares Speichermedium nach Anspruch 10, wobei die erste Rechnerumgebung ein Betriebssystem beinhaltet, das sich von einem Betriebssystem der ausgewählten virtuellen Einzelmandanten-Rechnerumgebung unterscheidet.

13. Nichtflüchtiges, computerlesbares Speichermedium nach Anspruch 10, wobei die ausführbaren Anweisungen ferner Anweisungen beinhalten, die, wenn sie von dem einen oder den mehreren Prozessoren ausgeführt werden, das Computersystem veranlassen, als ein Ergebnis des Auswählens der virtuellen Einzelmandanten-Rechnerumgebung aus der Vielzahl von virtuellen Einzelmandanten-Rechnerumgebungen Informationen zu übertragen, die bewirken, dass die ausgewählte virtuelle Einzelmandanten-Rechnerumgebung bereitgestellt wird.

14. Nichtflüchtiges, computerlesbares Speichermedium nach Anspruch 10, wobei die Richtlinie, die dem Dateityp zugeordnet ist, eine Reihenfolge der virtuellen Einzelmandanten-Rechnerumgebungen spezifiziert, die mindestens teilweise auf einem oder mehreren Sicherheitsaspekten jeder virtuellen Einzelmandanten-Umgebung der Vielzahl der virtuellen Einzelmandanten-Rechnerumgebungen basiert.

15. Nichtflüchtiges, computerlesbares Speichermedium nach Anspruch 10, wobei die Richtlinie in einer Registrierungsdatei eines Betriebssystems der ersten Rechnerumgebung codiert ist, wobei die Registrierungsdatei spezifiziert, dass Datendateien, die den entsprechenden Dateityp aufweisen, der Standortbestimmungsanwendung zugeordnet werden sollen, die dazu konfiguriert ist, zu bestimmen, dass die Datendateien in der ausgewählten virtuellen Einzelmandanten-Rechnerumgebung geöffnet werden sollen.

## Revendications

1. Procédé mis en œuvre par ordinateur comprenant :
sous le contrôle d'un dispositif informatique configuré avec des instructions exécutables,
la détection (702) d'une entrée dans un dispositif d'entrée du dispositif informatique indiquant une commande pour ouvrir un fichier de données, le fichier de données étant accessible à l'aide d'au moins une application installée sur le dispositif informatique et le fichier de données ayant un type de fichier correspondant ;
le fait de déterminer (704), à l'aide d'un système d'exploitation installé sur le dispositif informatique, qu'une application par défaut associée au type de fichier correspondant est une application de détermination d'emplacement ;
l'exécution (708) de l'application de détermination d'emplacement en tant qu'application par défaut pour le type de fichier ;
le fait de déterminer (710), à l'aide de l'application de détermination d'emplacement et sur la base d'une politique associée au type de fichier, si le fichier de données doit être ouvert localement à l'aide de l'au moins une application installée sur le dispositif informatique ou dans un environnement informatique virtuel distinct de l'environnement du dispositif informatique ;
sur la base de la détermination du fait que le fichier de données doit être ouvert dans l'environnement informatique virtuel, la fourniture du fichier de données à l'environnement informatique virtuel ; et
la transmission (714) d'une ou de plusieurs instructions exécutables pour amener l'environnement informatique virtuel à lancer une application appropriée utilisable pour ouvrir le fichier de données dans l'environnement informatique virtuel.

2. Procédé mis en œuvre par ordinateur selon la revendication 1, comprenant également :
la réception, depuis l'environnement informatique virtuel, d'un fichier de données modifié, le fichier de données modifié étant créé suite à l'ouverture du fichier de données à l'aide de l'application appropriée dans l'environnement informatique virtuel ; et
la synchronisation du fichier de données et du fichier de données modifié.

3. Procédé mis en œuvre par ordinateur selon la revendication 1, dans lequel la politique est codée dans un fichier de registre d'un système d'exploitation du système informatique, le fichier de registre spécifiant que les fichiers de données ayant le type de fichier correspondant doivent être associés à l'application de détermination d'emplacement configurée pour déterminer que les fichiers de données doivent être ouverts dans l'environnement informatique virtuel.

4. Procédé mis en œuvre par ordinateur selon la revendication 1, comprenant également, suite à la détermination du fait que le fichier de données doit être ouvert dans l'environnement informatique virtuel, la fourniture d'une ou de plusieurs informations d'identification associées à un utilisateur du dispositif informatique pour permettre au dispositif informatique d'être utilisé pour accéder à l'environnement informatique virtuel.

5. Système, comprenant :
un ou plusieurs processeurs (312) ;
une mémoire (306) comportant des instructions qui, lorsqu'elles sont exécutées par les un ou plusieurs processeurs, amènent le système à :
détecter, dans un premier environnement informatique, une commande pour ouvrir un fichier de données (412), le fichier de données étant accessible à l'aide d'au moins une application installée sur le premier environnement informatique et le fichier de données ayant un type de fichier correspondant ;
déterminer (704), à l'aide d'un système d'exploitation installé sur l'environnement informatique, qu'une application par défaut associée au type de fichier correspondant est une application de détermination d'emplacement ;
exécuter (708) l'application de détermination d'emplacement en tant qu'application par défaut pour le type de fichier ;
déterminer (710), à l'aide de l'application de détermination d'emplacement et sur la base d'une politique associée au fichier de données, si le fichier de données doit être ouvert localement à l'aide de l'au moins une application installée sur le premier environnement informatique ou dans un second environnement informatique, le premier environnement informatique et second environnement informatique étant séparés par un réseau ;
sur la base de la détermination du fait que le fichier de données doit être ouvert dans le second environnement informatique, fournir le fichier de données au second environnement informatique ;
transmettre (714) des informations au second environnement informatique qui provoquent l'ouverture du fichier de données dans le second environnement informatique.

6. Système selon la revendication 5, dans lequel la politique est codée dans un fichier de registre associé au fichier de données.

7. Système selon la revendication 5, dans lequel les instructions, lorsqu'elles sont exécutées par les un ou plusieurs processeurs, amènent également le système à :
détecter, dans le premier environnement informatique, une commande pour ouvrir un second fichier de données ;
déterminer, sur la base au moins en partie d'une politique associée au second fichier de données, que le second fichier de données doit être ouvert à l'aide d'une application dans le premier environnement informatique ; et
lancer l'application pour permettre l'utilisation du second fichier de données.

8. Système selon la revendication 5, dans lequel le premier environnement informatique est un environnement informatique virtuel à locataire unique diffusé en continu vers le système sur le réseau.

9. Système selon la revendication 5, dans lequel les instructions, lorsqu'elles sont exécutées par les un ou plusieurs processeurs, amènent également le système à :
recevoir, depuis le second environnement informatique, un fichier de données modifié, le fichier de données modifié étant créé suite à l'ouverture du fichier de données à l'aide de l'application dans le second environnement informatique ; et
synchroniser le fichier de données et le fichier de données modifié dans le premier environnement informatique.

10. Support de stockage non transitoire lisible par ordinateur sur lequel sont stockées des instructions exécutables qui, lorsqu'elles sont exécutées par un ou plusieurs processeurs d'un système informatique, amènent le système informatique à au moins :
en réponse à la détection (702), dans un premier environnement informatique, d'une commande pour ouvrir un fichier de données, le fichier de données étant accessible à l'aide d'au moins une application installée sur le premier environnement informatique et le fichier de données ayant un type de fichier correspondant ;
déterminer (704), à l'aide d'un système d'exploitation installé sur le premier environnement informatique, qu'une application par défaut associée au type de fichier correspondant est une application de détermination d'emplacement ;
exécuter (708) l'application de détermination d'emplacement en tant qu'application par défaut pour le type de fichier ;
sélectionner (710), sur la base d'une politique associée au type de fichier, un environnement informatique virtuel à locataire unique sélectionné parmi une pluralité d'environnements informatiques virtuels à locataire unique accessibles au système informatique pour ouvrir le fichier de données ;
sur la base de la détermination du fait que le fichier de données doit être ouvert dans l'environnement informatique sélectionné, la fourniture du fichier de données à l'environnement informatique virtuel à locataire unique sélectionné ; et
transmettre (714) des informations à l'environnement informatique virtuel à locataire unique sélectionné qui provoquent l'ouverture du fichier de données dans l'environnement informatique virtuel à locataire unique sélectionné.

11. Support de stockage non transitoire lisible par ordinateur selon la revendication 10, dans lequel les instructions exécutables comprennent également des instructions qui, lorsqu'elles sont exécutées par les un ou plusieurs processeurs, amènent le système informatique à fournir une ou plusieurs informations d'identification associées à un dispositif informatique utilisateur du premier environnement informatique pour permettre au dispositif informatique utilisateur d'accéder à l'environnement informatique virtuel à locataire unique sélectionné.

12. Support de stockage non transitoire lisible par ordinateur selon la revendication 10, dans lequel le premier environnement informatique comporte un système d'exploitation qui est distinct d'un système d'exploitation de l'environnement informatique virtuel à locataire unique sélectionné.

13. Support de stockage non transitoire lisible par ordinateur selon la revendication 10, dans lequel les instructions exécutables comportent également des instructions qui, lorsqu'elles sont exécutées par les un ou plusieurs processeurs, amènent le système informatique à, suite à la sélection de l'environnement informatique virtuel à locataire unique parmi la pluralité d'environnements informatiques virtuels à locataire unique, transmettre des informations qui provoquent la fourniture de l'environnement informatique virtuel à locataire unique sélectionné.

14. Support de stockage non transitoire lisible par ordinateur selon la revendication 10, dans lequel la politique associée au type de fichier spécifie un classement des environnements informatiques virtuels à locataire unique sur la base au moins en partie sur un ou plusieurs aspects de sécurité de chaque environnement virtuel à locataire unique de la pluralité d'environnements informatiques virtuels à locataire unique.

15. Support de stockage non transitoire lisible par ordinateur selon la revendication 10, dans lequel la politique est codée dans un fichier de registre d'un système d'exploitation du premier environnement informatique, le fichier de registre spécifiant que les fichiers de données ayant le type de fichier correspondant doivent être associés à l'application de détermination d'emplacement configurée pour déterminer que les fichiers de données doivent être ouverts dans l'environnement informatique virtuel à locataire unique sélectionné.
